# EUROPEAN PATENT SPECIFICATION

(11) **EP 2 690 280 B1**
(45) Date of publication and mention of the grant of the patent: **02.08.2017**
(21) Application number: 11861718.2
(22) Date of filing: 05.12.2011
(51) Int. Cl.: F02M 67/02, F02B 43/10, F02M 21/02, F02M 37/00, F02M 67/04

(54) **INJECTION DEVICE**
INJEKTIONSVORRICHTUNG
DISPOSITIF D'INJECTION

(30) Priority: 24.03.2011 JP 2011065813
(43) Date of publication of application: 29.01.2014
(73) Proprietor: Hitachi Zosen Corporation, Osaka-shi, Osaka 559-8559 (JP)
(72) Inventor: FUKUYAMA, Masahisa, Osaka-shi Osaka 559-8559 (JP); ISHIGURO, Kenji, Osaka-shi Osaka 559-8559 (JP); MURATA, Naohiro, Osaka-shi Osaka 559-8559 (JP)
(74) Representative: Müller-Boré & Partner Patentanwälte PartG mbB
(86) International application number: PCT/JP2011/078051
(87) International publication number: WO 2012/127743

(56) References cited:
- WO-A1-82/00175
- WO-A1-95/27845
- JP-A- 5 332 152
- JP-A- 11 118 274
- JP-A- 50 082 433
- JP-A- 2003 269 256
- JP-A- 2009 250 137
- US-A- 4 416 224
- US-A1- 2010 288 249

## Description

### Technical Field

The present invention relates to an injection apparatus for injecting ammonia into a combustion chamber of an engine to cause combustion in the combustion chamber.

### Background Art

Engines that burn an ammonia gas have conventionally been proposed. For example, Japanese Patent Application Laid-Open No. 5-332152 (Document 1) discloses a technique for decomposing an ammonia gas into hydrogen and nitrogen by the heat of an exhaust gas from a combustion chamber and causing the resultant hydrogen gas to burn in the initial stage to cause combustion of an ammonia gas that is separately supplied into the combustion chamber. With the technique of Document 1, it is possible to effectively burn an ammonia gas that is difficult to ignite spontaneously (the temperature required for the ammonia gas to ignite spontaneously at normal atmospheric pressure is 651°C).

The technique of Document 1, however, requires an ammonia decomposition reactor for decomposing an ammonia gas into hydrogen and nitrogen, means for occluding hydrogen, or the like, which complicates the configuration of the engine. There is thus demand for new techniques that can easily produce combustion in the combustion chamber of an ammonia-fueled engine.

A further example of ammonia injection device can be found in WO 82/00175 A1.

### Summary of Invention

The present invention is intended for an injection apparatus for injecting ammonia into a combustion chamber of an engine to cause combustion in the combustion chamber, and it is an object of the present invention to easily produce the combustion of ammonia in the combustion chamber.

The injection apparatus according to the present invention includes a container, a liquid ammonia supply part for supplying a predetermined amount of liquid ammonia into the container, a compression part connected to the container and for compressing a gas filled in a space for compression to introduce the compressed gas into the container, and a nozzle connected to the container and for introducing ammonia together with said compressed gas into the combustion chamber said ammonia being pushed out of the container due to the introduction of the compressed gas into the container.

According to the present invention, it is possible to easily produce the combustion of ammonia in the combustion chamber by using a gas that is heated to a high temperature by compression to inject ammonia into the combustion chamber.

Preferably, the gas contains oxygen, and more preferably, the gas is an oxygen gas or an exhaust gas that is exhausted from the combustion chamber.

In a preferred embodiment of the present invention, the injection apparatus further includes a heating part for heating the gas, and therefore, can further increase the temperature of the compressed gas. In this case, it is preferable that the gas is heated in the heating part with an exhaust gas exhausted from the combustion chamber. This can improve the energy efficiency of the engine.

These and other objects, features, aspects and advantages of the present invention will become more apparent from the following detailed description of the present invention when taken in conjunction with the accompanying drawings.

### Brief Description of Drawings

Fig. 1 illustrates a configuration of a two-stroke engine;
Fig. 2 illustrates a configuration of an injection apparatus;
Fig. 3 shows another example of the two-stroke engine; and
Fig. 4 shows yet another example of the two-stroke engine.

### Description of Embodiments

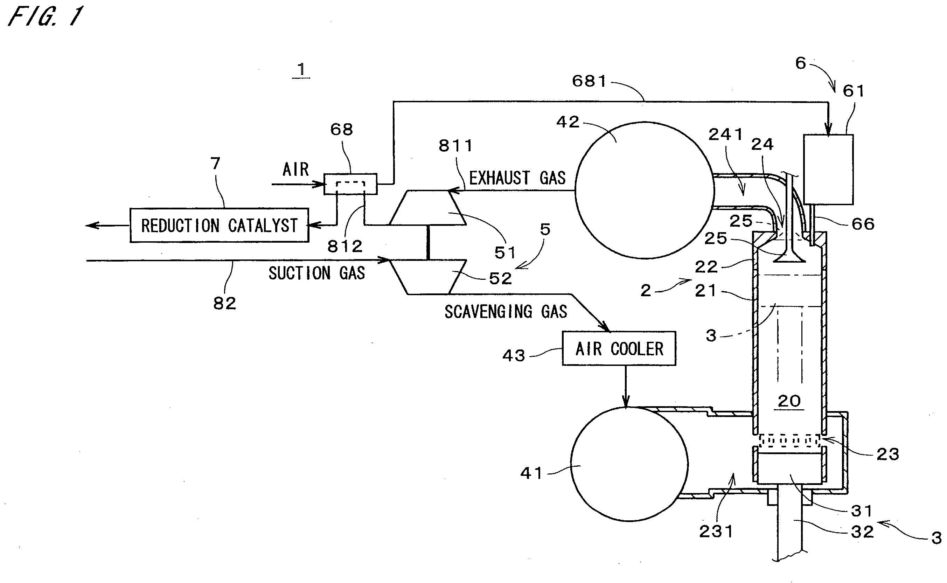

Fig. 1 illustrates a configuration of a two-stroke engine 1 according to an embodiment of the present invention. The two-stroke engine 1 is a marine internal combustion engine and uses ammonia (NH₃) as a fuel. The two-stroke engine 1 includes a cylinder 2 and a piston 3 provided in the cylinder 2. The piston 3 is movable in the vertical direction in Fig. 1. Note that the vertical direction in Fig. 1 is not necessarily the direction of gravity.

The cylinder 2 includes a cylindrical cylinder liner 21 and a cylinder cover 22 that is attached to the top of the cylinder liner 21. The piston 3 includes a thick disk-shaped piston crown 31 inserted in the cylinder liner 21, and a piston rod 32 having one end connected to the bottom surface of the piston crown 31. The other end of the piston rod 32 is connected to a crank mechanism not shown.

In the two-stroke engine 1, a space enclosed by the cylinder liner 21, the cylinder cover 22, an exhaust valve 25 (described later), and the upper surface of the piston crown 31 (i.e., the upper surface of the piston 3) forms a combustion chamber 20 for burning ammonia and air. The cylinder cover 22 is provided with an injection apparatus 6 for supplying a fuel to the combustion chamber 20. In the present embodiment, liquid ammonia is used as the fuel. The configuration of the injection apparatus 6 will be described later.

A large number of through holes are circumferentially arranged in the vicinity of a lower end portion of the cylinder liner 21, and a cluster of these through holes constitute a scavenging port 23 for supplying a scavenging gas, which will be described later, into the combustion chamber 20. Around the scavenging port 23 is provided a scavenging chamber 231, and the scavenging port 23 communicates with a scavenging pipe 41 through the scavenging chamber 231.

The cylinder cover 22 has an exhaust port 24 for exhausting a gas within the combustion chamber 20 out of the combustion chamber 20. The exhaust port 24 is provided with the exhaust valve 25 that opens and closes the exhaust port 24. The gas exhausted from the combustion chamber 20 through the exhaust port 24 (hereinafter referred to as an "exhaust gas") is guided through a first exhaust path 241 to an exhaust pipe 42. In the actual two-stroke engine 1, a plurality of cylinders 2 are provided in parallel, and these cylinders 2 are connected to the single scavenging pipe 41 and the single exhaust pipe 42.

The two-stroke engine 1 further includes a supercharger 5 serving as a turbocharger, and an air cooler 43 for cooling air supplied from the supercharger 5 by a cooling medium such as sea water. The supercharger 5 includes a turbine 51 and a compressor 52, and the turbine 51 is rotated by the exhaust gas fed from the exhaust pipe 42 through a second exhaust path 811. The compressor 52 uses rotary power generated by the turbine 51 (i.e., uses the rotation of the turbine 51 as power) to pressurize and compress a suction gas (air) taken in from outside of the two-stroke engine 1 through a suction path 82. The pressurized air (hereinafter referred to as a "scavenging gas") is cooled by the air cooler 43 and then supplied into the scavenging pipe 41. In this way, the supercharger 5 pressurizes the suction gas using the exhaust gas and thereby generates a scavenging gas.

The exhaust gas used to rotate the turbine 51 passes through a third exhaust path 812 and is exhausted out of the two-stroke engine 1 through a reduction catalyst 7 for reducing nitrogen oxide (NO_{X}). As mentioned above, the fuel of the two-stroke engine 1 is ammonia, and accordingly there is no sulfur content in the fuel. Thus, the exhaust gas is exhausted into the outside air without needing to remove sulfur content with a scrubber. It is thus possible to simplify a marine structure that includes the two-stroke engine 1.

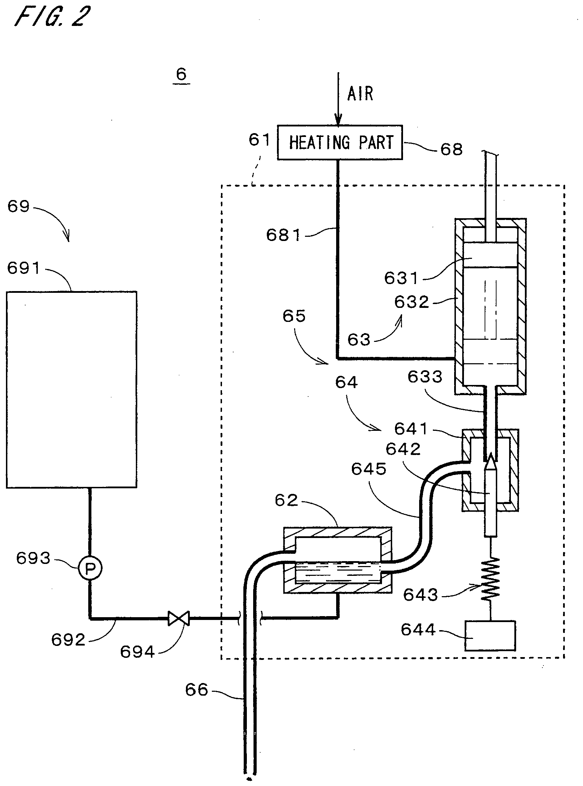

Fig. 2 illustrates a configuration of the injection apparatus 6. The injection apparatus 6 includes an apparatus body 61 and a liquid ammonia supply part 69. In the two-stroke engine 1, the apparatus body 61 is provided for each of a plurality of cylinders 2, and the single liquid ammonia supply part 69 is connected to a plurality of apparatus bodies 61. In other words, the single liquid ammonia supply part 69 is shared among a plurality of injection apparatuses 6 that are provided respectively in the plurality of cylinders 2.

The apparatus bodies 61 each include a container 62 that is connected to one end of an ammonia supply path 692. The other end of the ammonia supply path 692 is connected to a liquid ammonia tank 691 of the liquid ammonia supply part 69. The ammonia supply path 692 is provided with a supply pump 693 and a supply valve 694. By opening the supply valve 694, a predetermined amount of liquid ammonia is supplied from the liquid ammonia tank 691 into the container 62. In actuality, the ammonia supply path 692 extending from the liquid ammonia tank 691 branches into a plurality of branch flow passages that are connected respectively to the containers 62 of the plurality of apparatus bodies 61, because the single liquid ammonia supply part 69 is shared among the plurality of injection apparatuses 6 as described previously. Note that the supply pump 693 is provided between the liquid ammonia tank 691 and the branch point, and the supply valve 694 is provided on each of the branch flow passages. This configuration allows liquid ammonia to be supplied to the plurality of apparatus bodies 61 using only the single supply pump 693, and also allows the liquid ammonia to be supplied at different times to the apparatus bodies 61 by controlling the supply valves 694.

The injection apparatus 6 further includes a heating part 68 for taking air in from outside the two-stroke engine 1 and heating the air (which is the gas used to guide the fuel to the combustion chamber 20 as will be described later, and is hereinafter referred to as an "auxiliary gas"). The heating part 68 is configured to include part of the third exhaust path 812 in Fig. 1 and heats the auxiliary gas by the heat of the exhaust gas exhausted from the turbine 51. Note that the heating part 68 is also shared among the plurality of injection apparatuses 6.

Each apparatus body 61 includes a compression main body 63 serving as a plunger pump (or a piston pump), and the compression main body 63 includes a pump cylinder 632 and a pump piston 631. The pump piston 631 is moved in the axial direction of the pump cylinder 632 by a cam mechanism (not shown) in accordance with the crank angle of the crank mechanism. At the end (the lower end in Fig. 2) of the pump cylinder 632 is provided an exhaust path 633.

The pump cylinder 632 is connected, in the vicinity of the exhaust path 633, to one end of an auxiliary gas supply path 681 extending from the heating part 68. The auxiliary gas supply path 681 is provided with a check valve (not shown) that prevents the auxiliary gas in the pump cylinder 632 from returning to the heating part 68. The end of the exhaust path 633 is connected to an injection pressure control valve 64, which will be described later. The injection pressure control valve 64 prevents the auxiliary gas exhausted out of the exhaust path 633 from returning into the pump cylinder 632. Therefore, in the compression main body 63, the pump cylinder 632 is filled with the auxiliary gas within the heating part 68 by the pump piston 631 moving in the direction away from the exhaust path 633 (upward in Fig. 2). Also, the auxiliary gas within the pump cylinder 632 is exhausted through the exhaust path 633, as will be described later, by the pump piston 631 moving toward the exhaust path 633. Note that the volumetric capacity of the pump cylinder 632 is sufficiently greater than that of a flow passage extending from the exhaust path 633 through the container 62 to a nozzle 66, which will be described later.

The injection pressure control valve 64 includes a casing 641, and the end of the exhaust path 633 is disposed within the casing 641. Inside the casing 641, a valve body 642 is provided at the opening of the exhaust path 633, and this opening is closed by the valve body 642 being pushed against the opening by a biasing part 643.

In the apparatus body 61, the opening of the exhaust path 633 is closed immediately after the pump piston 631 has started moving from the position indicated by the solid line in Fig. 2 toward the exhaust path 633, and accordingly the pressure and temperature of the auxiliary gas within the pump cylinder 632 increase gradually. The opening of the exhaust path 633 is then opened when the force with which the auxiliary gas pushes the valve body 642 is greater than the force with which the biasing part 643 causes the valve body 642 to close the opening. Accordingly, the compressed auxiliary gas (hereinafter simply referred to as a "compressed gas") is exhausted from the opening. The casing 641 is provided with a communication path 645 connected to the container 62 so that the compressed gas is introduced through the communication path 645 into the container 62. In this way, the compression main body 63 and the injection pressure control valve 64 of the injection apparatus 6 constitute a compression part 65 for compressing the auxiliary gas filled in the pump cylinder 632, which is a space for compression, to introduce the compressed gas into the container 62. Note that the biasing force of the biasing part 643 is adjustable by an adjustment part 644, and therefore, the pressure of the compressed gas to be introduced into the container 62 can also be changed.

As described previously, liquid ammonia is supplied from the liquid ammonia tank 691 into the container 62. Also, the nozzle 66 is connected to an upper portion of the container 62 (above the liquid level of the liquid ammonia). At the time when the compressed gas is introduced into the container 62, the supply valve 694 on the ammonia supply path 692 is closed and the container 62 is in a sealed state, except for portions where the nozzle 66 and the communication path 645 are connected. Accordingly, the liquid ammonia within the container 62 is pushed out due to the introduction of the compressed gas into the container 62 and is injected together with the compressed gas through the nozzle 66 into the combustion chamber 20. Note that the ammonia injected from the nozzle 66 is in a state (gas-liquid mixed state) of containing liquid ammonia (containing droplets) and gaseous ammonia.

Next is a description of operations of the two-stroke engine 1. In the two-stroke engine 1, the position of the piston 3 indicated by dashed double-dotted lines in Fig. 1 is the top dead center, and the position of the piston 3 indicated by solid lines is the bottom dead center. When the piston 3 is positioned in the vicinity of the top dead center, the exhaust valve 25 has moved upward and closes the exhaust port 24 as indicated by the dashed double-dotted lines in Fig. 1 so that the scavenging gas within the combustion chamber 20 is compressed.

In the injection apparatus 6 in Fig. 2, the pump piston 631 moves toward the exhaust path 633 in synchronization with the movement of the piston 3 so that a high temperature and high pressure compressed gas is introduced into the container 62 and the ammonia within the container 62 is injected together with the compressed gas into the combustion chamber 20 in Fig. 1 through the nozzle 66. In the combustion chamber 20, the spontaneous ignition of vaporized ammonia is accelerated by the high temperature compressed gas, causing combustion (expansion) of the gases (i.e., the ammonia gas, the compressed gas, and the scavenging gas) in the combustion chamber 20. This causes the piston 3 to be pushed down toward the bottom dead center. Note that a configuration is possible in which ignited ammonia is injected into the combustion chamber 20 through the nozzle 66.

In the injection apparatus 6 in Fig. 2, a predetermined amount of liquid ammonia (in the present embodiment, an amount that is required for one injection and is variable as an amount according to the output of the two-stroke engine 1) is supplied into the container 62 by the liquid ammonia supply part 69 within the period of time from when the injection of the ammonia is finished until when the piston 3 next reaches in the vicinity of the top dead center. Also, the auxiliary gas within the heating part 68 fills the pump cylinder 632 as a result of the pump piston 631 moving in the direction away from the exhaust path 633.

In the two-stroke engine 1 in Fig. 1, the exhaust valve 25 moves downward to open the exhaust port 24 after the combustion of gas in the combustion chamber 20 and before the piston 3 reaches the bottom dead center. This starts exhaustion of the burnt gas in the combustion chamber 20. The gas exhausted from the combustion chamber 20 (e.g., "exhaust gas") is sent through the first exhaust path 241, the exhaust pipe 42, and the second exhaust path 811 to the turbine 51 of the supercharger 5 as described previously. The exhaust gas that has passed through the turbine 51 is used to heat the auxiliary gas in the heating part 68. The exhaust gas that has passed through the heating part 68 passes through the reduction catalyst 7 and is exhausted out of the two-stroke engine 1. Note that, in the two-stroke engine 1, the exhaust valve 25 is moved up and down (i.e., the exhaust port 24 is opened or closed) by the cam mechanism connected to a crank shaft of the crank mechanism.

When the piston 3 has moved to the vicinity of the bottom dead center and the upper surface of the piston crown 31 is positioned below the scavenging port 23, the combustion chamber 20 communicates with the scavenging chamber 231 (i.e., the scavenging port 23 is opened) and the supply of the scavenging gas within the scavenging chamber 231 into the combustion chamber 20 is started. The piston 3 that has passed through the bottom dead center changes to move upward, and when the upper surface of the piston crown 31 has reached above the scavenging port 23, the scavenging port 23 is closed and the supply of the scavenging gas into the combustion chamber 20 is stopped. Then, the exhaust port 24 is closed with the exhaust valve 25 and the combustion chamber 20 is sealed.

The piston 3 further moves upward so that the scavenging gas within the combustion chamber 20 is compressed, and when the piston 3 has reached in the vicinity of the top dead center, the injection apparatus 6 injects ammonia together with the compressed gas into the combustion chamber 20, thereby causing combustion in the combustion chamber 20. The two-stroke engine 1 repeats the operations described above.

Incidentally, although it is possible to use a spark plug or the like to cause the combustion of ammonia in the combustion chamber 20, the spark plug, for example, is a consumable article and thus it is undesirable to use a spark plug in internal combustion engines for marine vessels that, as a rule, do not stop their engines outside port. Although it is also possible to use a pilot fuel such as a hydrogen gas to cause the combustion of ammonia in the combustion chamber 20, it requires installation of a tank and an injection mechanism for each of the different fuels such as liquid ammonia and the pilot fuel and will complicate the configuration of the engine.

In contrast, in the injection apparatus 6 in Fig. 2, the compression part 65 compresses the gas filled in the space for compression and introduces the compressed gas into the container 62 holding liquid ammonia. Then, the ammonia is pushed out of the container 62 due to the introduction of the compressed gas and introduced together with the compressed gas into the combustion chamber 20 through the nozzle 66. In this way, the injection apparatus 6 that uses a gas that is heated to a high temperature by compression to inject ammonia into the combustion chamber 20 can easily produce the combustion of ammonia in the combustion chamber 20. In the injection apparatus 6, the configuration of the engine is not complicated because the ammonia and the auxiliary gas are injected from the single compression part 65 into the combustion chamber 20.

The injection apparatus 6, by including the heating part 68 for heating the auxiliary gas, can further increase the temperature of the compressed gas and thereby can more reliably produce the combustion of gases including ammonia in the combustion chamber 20. Moreover, the heating part 68 uses the exhaust gas exhausted from the combustion chamber 20 to heat the auxiliary gas, thereby making it possible to improve the energy efficiency of the two-stroke engine 1.

Here, in the hypothetical case where liquid ammonia is directly injected into the combustion chamber 20 with a plunger pump, i.e., the pump cylinder 632 of the compression main body 63 in Fig. 2 is filled with liquid ammonia and the ammonia is directly injected from the exhaust path 633 into the combustion chamber 20, if a gas comes into the pump cylinder 632, the liquid ammonia within the pump cylinder 632 is insufficiently pressurized due to compression of the gas when the pump piston 631 is pushed into the cylinder, possibly resulting in the ammonia not being properly injected into the combustion chamber 20 (vapor lock phenomenon). In particular, when liquid ammonia is used as a fuel, there is a higher possibility that the liquid ammonia will vaporize when being filled into the pump cylinder 632 and the gas will exist in the pump cylinder 632.

In contrast, the injection apparatus 6, in which the compression part 65 compresses the auxiliary gas, will not produce such a vapor lock phenomenon because the compression target is a gas, and therefore can reliably inject ammonia into the combustion chamber 20.

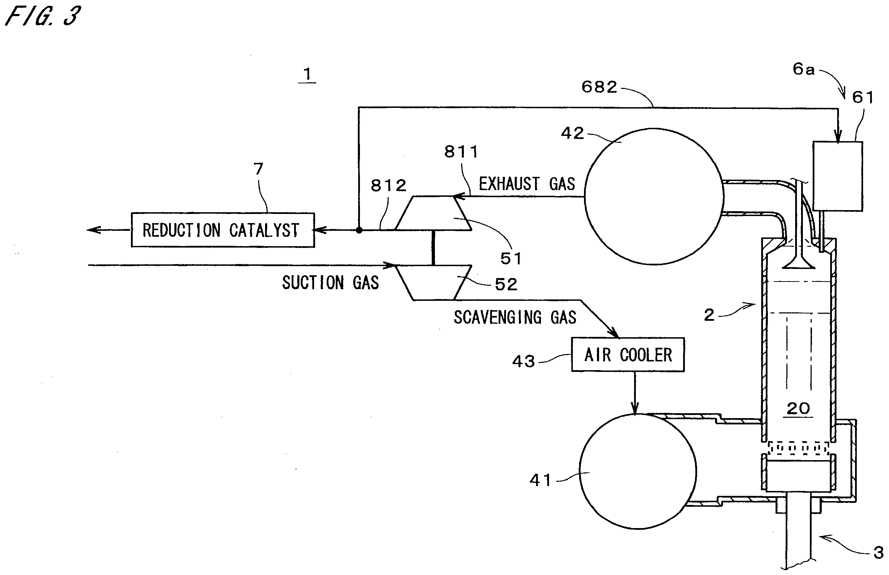

Fig. 3 shows another example of the two-stroke engine 1. An injection apparatus 6a in Fig. 3 does not include the heating part 68 of the injection apparatus 6 in Fig. 1, and is newly provided with an auxiliary flow passage 682 for guiding part of the exhaust gas in the third exhaust path 812 to the apparatus body 61. The other constituent elements are the same as that of the two-stroke engine 1 in Fig. 1, and constituent elements that are the same as those in Fig. 1 are denoted by the same reference numerals.

In the injection apparatus 6a, a high temperature exhaust gas that has passed through the turbine 51 is filled as an auxiliary gas into the pump cylinder 632 in Fig. 2 through the auxiliary flow passage 682. Then, the compression part 65 compresses the auxiliary gas within the pump cylinder 632 and introduces the compressed gas into the container 62 so that the ammonia pushed out of the container 62 is injected together with the compressed gas into the combustion chamber 20. In this way, the injection apparatus 6a that uses the exhaust gas exhausted from the combustion chamber 20 as an auxiliary gas can further increase the temperature and pressure of the compressed gas and can easily and more reliably cause the combustion of gases containing ammonia in the combustion chamber 20.

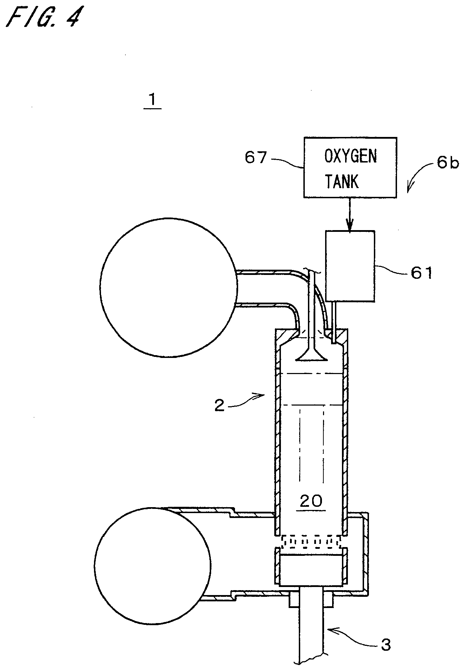

Fig. 4 shows yet another example of the two-stroke engine 1. An injection apparatus 6b in Fig. 4 does not include the heating part 68 of the injection apparatus 6 in Fig. 1, and is newly provided with an oxygen tank 67 that is connected to the apparatus body 61. The other constituent elements are the same as that of the two-stroke engine 1 in Fig. 1, and constituent elements that are the same as those in Fig. 1 are denoted by the same reference numerals.

In the injection apparatus 6b, an oxygen gas supplied from the oxygen tank 67 is filled as an auxiliary gas into the pump cylinder 632 in Fig. 2. Then, the compression part 65 compresses the auxiliary gas within the pump cylinder 632 and introduces the compressed gas into the container 62 so that the ammonia pushed out of the container 62 is injected together with the compressed gas into the combustion chamber 20. In this way, the injection apparatus 6a that uses the oxygen gas as the auxiliary gas can accelerate the spontaneous ignition of ammonia using the high temperature and high pressure oxygen gas and can easily and more reliably produce the combustion of gases containing ammonia in the combustion chamber 20. Note that the injection apparatus 6b in Fig. 4 may be provided with the heating part 68 and may inject ammonia, using the compressed gas that is generated by compressing the heated oxygen gas.

While the above has been a description of embodiments of the present invention, the present invention is not limited to the embodiments described above and can be modified in various ways.

Although the injection apparatuses 6, 6a, and 6b described above can easily produce the combustion of the ammonia gas within the combustion chamber 20 by injecting ammonia into the combustion chamber 20, using the compressed gas generated by compressing the auxiliary gas containing oxygen, it is possible, depending on the design of the two-stroke engine 1, to use an auxiliary gas that does not contain oxygen (e.g., an ammonia gas). Even in this case, combustion in the combustion chamber 20 can be easily produced by using a compressed gas that is heated to a high temperature by compression to inject ammonia into the combustion chamber 20. Alternatively, a mixture of liquid ammonia and petroleum fuel or the like may be supplied into the container 62 and injected into the combustion chamber 20.

In the injection apparatuses 6, 6a, and 6b, the compression part 65 may include other reciprocating pumps (e.g., a diaphragm pump or a bellows pump) or the like. Specifically, the compression part 65 for compressing the gas filled in the space for compression to introduce the compressed gas into the container 62 can be implemented in various forms. Alternatively, the heating part 68 may be provided with a heater so that the auxiliary gas can be heated without using the exhaust gas.

The injection apparatuses 6, 6a, and 6b described in the above embodiments may be used in four-stroke engines. The engines including the injection apparatuses 6, 6a, and 6b may be used in various applications, aside from marine applications, such as in automobiles or prime movers for electric power generation.

The configurations of the above-described preferred embodiments and variations may be appropriately combined as long as there are no mutual inconsistencies.

While the invention has been shown and described in detail, the foregoing description is in all aspects illustrative and not restrictive. It is therefore to be understood that numerous modifications and variations can be devised without departing from the scope of the invention.

### Reference Signs List

- 1: Two-stroke engine
- 6, 6a, 6b: Injection apparatus
- 20: Combustion chamber
- 62: Container
- 65: Compression part
- 66: Nozzle
- 68: Heating part
- 69: Liquid ammonia supply part

## Claims

1. An injection apparatus (6, 6a, 6b) for injecting ammonia into a combustion chamber (20) of an engine (1) to cause combustion in said combustion chamber, comprising:
a container (62); and
a liquid ammonia supply part (69) for supplying a predetermined amount of liquid ammonia into said container; and **characterized by**
a compression part (65) connected to said container and for compressing a gas filled in a space for compression to introduce the compressed gas into said container; and
a nozzle (66) connected to said container and for introducing ammonia together with said compressed gas into said combustion chamber, said ammonia being pushed out of said container due to the introduction of said compressed gas into said container.

2. The injection apparatus according to claim 1, wherein
said gas contains oxygen.

3. The injection apparatus according to claim 2, wherein
said gas is an oxygen gas.

4. The injection apparatus according to claim 2, wherein
said gas is an exhaust gas that is exhausted from said combustion chamber.

5. The injection apparatus according to any one of claims 1 to 3, further comprising:
a heating part (68) for heating said gas.

6. The injection apparatus according to claim 5, wherein
said heating part heats said gas with an exhaust gas exhausted from said combustion chamber.

## Patentansprüche

1. Injektionsvorrichtung (6, 6a, 6b) zum Injizieren von Ammoniak in eine Verbrennungskammer (20) eines Motors (1), um Verbrennung in der Verbrennungskammer zu bewirken, umfassend:
einen Behälter (62), und
ein Flüssigammoniak-Zuführteil (69) zum Einführen einer vorbestimmten Menge von flüssigem Ammoniak in den Behälter, und **gekennzeichnet durch** ein Kompressionsteil (65), verbunden mit dem Behälter und zum Komprimieren eines Gases, gefüllt in einen Raum zur Kompression, um das komprimierte Gas in den Behälter einzuführen, und
eine Düse (66), verbunden mit dem Behälter und zum Einführen von Ammoniak zusammen mit dem komprimierten Gas in die Verbrennungskammer, wobei das Ammoniak aus dem Behälter gestoßen wird in Folge der Einführung des komprimierten Gases in den Behälter.

2. Injektionsvorrichtung gemäß Anspruch 1, wobei das Gas Sauerstoff enthält.

3. Injektionsvorrichtung gemäß Anspruch 2, wobei das Gas ein Sauerstoffgas ist.

4. Injektionsvorrichtung gemäß Anspruch 2, wobei das Gas ein Abgas ist, welches aus der Verbrennungskammer ausgestoßen wird.

5. Injektionsvorrichtung gemäß einem der Ansprüche 1 bis 3, weiter umfassend:
ein Erwärmungsteil (68) zum Erwärmen des Gases.

6. Injektionsvorrichtung gemäß Anspruch 5, wobei das Erwärmungsteil das Gas mit einem Abgas, ausgestoßen aus der Verbrennungskammer, erwärmt.

## Revendications

1. Dispositif d'injection (6, 6a, 6b) pour injecter de l'ammoniac dans une chambre de combustion (20) d'un moteur (1) pour provoquer une combustion dans ladite chambre de combustion, comprenant :
un récipient (62) ; et
une partie d'approvisionnement en ammoniac liquide (69) destinée à alimenter en une quantité prédéterminée d'ammoniac liquide ledit récipient ; et **caractérisé par**
une partie de compression (65) reliée audit récipient et destinée à comprimer un gaz répandu dans un espace de compression pour introduire le gaz comprimé dans ledit récipient ; et
un ajutage (66) relié audit récipient et destiné à introduire de l'ammoniac avec ledit gaz comprimé dans ladite chambre de combustion, ledit ammoniac étant expulsé dudit récipient en raison de l'introduction dudit gaz comprimé dans ledit récipient.

2. Dispositif d'injection selon la revendication 1, dans lequel
ledit gaz contient de l'oxygène.

3. Dispositif d'injection selon la revendication 2, dans lequel
ledit gaz est de l'oxygène gazeux.

4. Dispositif d'injection selon la revendication 2, dans lequel
ledit gaz est un gaz d'échappement qui s'échappe depuis ladite chambre de combustion.

5. Dispositif d'injection selon l'une quelconque des revendications 1 à 3, comprenant en outre :
une partie chauffante (68) destinée à chauffer ledit gaz.

6. Dispositif d'injection selon la revendication 5, dans lequel
ladite partie chauffante chauffe ledit gaz avec un gaz d'échappement s'échappant depuis ladite chambre de combustion.
